(19) Europäisches Patentamt
European Patent Office
Office européen des brevets

(11) **EP 2 491 708 B1**

(12) # EUROPÄISCHE PATENTSCHRIFT

(45) Veröffentlichungstag und Bekanntmachung des Hinweises auf die Patenterteilung:
**14.02.2018 Patentblatt 2018/07**

(21) Anmeldenummer: **10775713.0**

(22) Anmeldetag: **19.10.2010**

(51) Int Cl.:
***H04N 1/60*** *(2006.01)*

(86) Internationale Anmeldenummer:
**PCT/EP2010/006380**

(87) Internationale Veröffentlichungsnummer:
**WO 2011/047831 (28.04.2011 Gazette 2011/17)**

(54) **VERFAHREN ZUR ERSTELLUNG EINER OPTIMIERTEN DRUCKERKALIBRIERUNG**

METHOD FOR GENERATING AN OPTIMIZED PRINTER CALIBRATION

PROCÉDÉ D'OPTIMISATION DE L'ÉTALONNAGE D'UNE IMPRIMANTE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.10.2009 DE 102009049960**

(43) Veröffentlichungstag der Anmeldung:
**29.08.2012 Patentblatt 2012/35**

(73) Patentinhaber: **GMG GmbH & Co. KG**
**72072 Tübingen (DE)**

(72) Erfinder:
 • **WURSTER, Jürgen**
 **72135 Dettenhausen (DE)**
 • **KRAMER, Henning**
 **72076 Tübingen (DE)**

(74) Vertreter: **Rausch Wanischeck-Bergmann Brinkmann**
**Partnerschaft mbB Patentanwälte**
**Am Seestern 8**
**40547 Düsseldorf (DE)**

(56) Entgegenhaltungen:
**EP-A1- 1 398 956      EP-A2- 1 237 355**
**US-A1- 2003 098 986**

 • **EFI: "Printer linearization", , 13. August 2007 (2007-08-13), XP000002657701, Gefunden im Internet:**
**URL:http://w3.efi.com/services/proofing-services/~/media/Files/EFI/COM/Services/Printer-linearization_070813.pdf [gefunden am 2011-08-25]**

**Beschreibung**

Die vorliegend Erfindung betrifft ein Verfahren zur Erstellung einer optimierten Druckerkalibrierung.

Im Allgemeinen werden Drucker (Inkjet-Systeme, Laser-Systeme, sonstige digitale Drucksysteme) über eine dichtebasierte Linearisierung der Primärfarben linearisiert bzw. kalibriert. Diese Drucker arbeiten im Allgemeinen mit den Primärfarben Cyan, Magenta, Gelb und Schwarz (CMYK). Unter Kalibration wird hier die Wiederherstellung eines definierten Sollzustands verstanden. Im Beispiel der Dichtekalibrierung also das Wiedererreichen von Solldichten. Für die Linearisierung wird die maximale Farbdichte für jede Farbe bestimmt und dann linear absteigend für Zwischenstufen der entsprechende Dichtewert. Danach werden die prozentualen Ansteuerungswerte (Tonwerte) gesucht, bei denen die definierten Farbdichten erreicht werden. Diese Zuordnung wird für jede Druckfarbe in einer 1-dimensionalen Tabelle gespeichert. Bei einer Kalibrierung wird diese Suche erneut wiederholt um die definierten Dichten wieder zu erreichen; allerdings wird in diesem Fall das geänderte Verhalten des Druckers berücksichtigt. Anstelle von gemessenen Dichten können auch gemessene Farbwerte (z.B. CIELAB-Werte) zur Linearisierung und Kalibrierung verwendet werden. Beispiel: Für 100% Cyan wird eine Maximaldichte von 1,5 gemessen. Um die Hälfte der Dichte, also 0,75 zu erreichen muss nur 43% Cyan gedruckt werden. In der Linearisierungs- bzw. Kalibrierungstabelle wird also für den Eingangswert 50% der Ausgangswert 43% zugeordnet.

Bei dieser Methode bleibt unberücksichtigt, dass sich das Zusammendruckverhalten des Druckers ändern kann, obwohl die Primärfarben nach einer Kalibrierung wieder den Sollzustand erreicht haben. Trotz Kalibrierung entsteht also im Zusammendruck ein sichtbarer Unterschied. Eine Verbesserung der Kalibrierung wird dadurch erreicht, das eine 3- oder höher dimensionale Zuordnungstabelle gebildet wird, die auch Sollwerte für Farben, die sich aus dem Zusammendruck ergeben, enthält. Bei einer Kalibrierung wird dann eine Kombination aus den Primärfarben gesucht, die die definierte Sollfarbe abbilden. Als Sollwerte werden in diesem Fall gemessene Farbwerte verwendet, die dem visuellen Empfinden des menschlichen Auges entsprechen (CIELAB). In diesem Fall werden also in der Kalibrierungstabelle für eine Kombination der Eingangstonwerte ein CIELAB-Sollwert und die zur Erreichen des Sollwerts notwendige Kombination der Primärfarben gespeichert.

Als weiterer wichtiger Aspekt ergibt sich hieraus eine definierte und gleichbleibende Beschreibung des druckbaren Farbumfangs des Druckers, die sich für weitere Aufgaben, wie z. B. für die Berechnung von Simulationsprofilen einsetzen lässt. Dabei wird ein anderes Farbwiedergabeverfahren auf dem Drucker simuliert.

Bei den bekannten Verfahren werden die Sollwerte gemessen. Dadurch ist nicht zwingend erreicht, dass die Werte gleichabständig sind. Auch erfolgt keine neutrale Graubalance. Demgegenüber unterliegen die gemessenen Sollwerte den üblichen, bei jeder Messung auftretenden Schwankungen.

Den Begrifflichkeiten, die im vorliegenden Zusammenhang verwendet werden, werden die folgenden kurzen Bedeutungen zugrunde gelegt:

Farben, in der Farbmetrik genauer als Farbvalenz bezeichnet, beruhen auf Farbreizen, die sich durch ihre spektrale Zusammensetzung unterscheiden. Durch die Notwendigkeit, diese Unterschiede exakt definieren zu können, wurden verschiedene Farbmodelle entwickelt. Jede Farbe kann durch einen Farbnamen (beschreibende Worte), aber auch durch den numerischen Farbort definiert werden. Je nach Farbmodell kann die Farbe nach Helligkeit, Sättigung und Farbton, aber auch nach Hell-/Dunkel-, Rot-/Grün- und Gelb/Blau-Wert (wie z.B. im häufig verwendeten CIELAB-Farbmodell) mit drei derartigen Größen eindeutig beschrieben sein.

Im CIELAB-Farbmodell spannen die drei Größen L*, a* und b* einen dreidimensionalen kartesischen Raum auf, den man als Farbraum bezeichnet. Ein Farbort bezeichnet hier einen Punkt in diesem CIELAB-Farbraum, der durch seine drei Koordinaten gegeben ist. Der Abstand zwischen zwei Farborten entspricht angenähert dem visuell empfundenen Farbunterschied zwischen den Realisierungen dieser Farben. Farbräume dienen also unter anderem zur Visualisierung von Differenzen zwischen einem Idealzustand, etwas den gewünschten Sollwerten, und der erzielten Realität.

Eine farbgebende Methode kann nur einen Teil aller denkbaren Farborte verwirklichen. Einige Farben haben zwar einen definierten Farbort, sind aber mit den verfügbaren Farbmitteln nicht darstellbar. Die darstellbaren Farben bilden innerhalb des Farbraums einen Körper, auch als Gamut bezeichnet. Dieser Körper wird Farbumfang genannt.

Die US 2003/098986 A1 offenbart ein Verfahren zur Erstellung einer optimierten Druckerkalibrierung, wobei für jede Primärfarbe der Maximalwert farbmetrisch begrenzt wird, jede Primärfarbe farbmetrisch linearisiert wird, der Maximalwert des Zusammendrucks aller Primärfarben farbmetrisch bestimmt wird, eine Definition des sich ergebenden Farbumfangs durchgeführt wird, die Außenhülle des Farbumfangs gleichabständig bestimmt wird und die Zwischenwerte der sich ergebenden Kalibrierungstabelle interpoliert werden. Dazu wird die Farbdichte der reinen Primärfarben in Abstufungen für verschiedene Tonwerte gemessen und mit den Sollwerten abgeglichen. Die Messungen können jedoch mit Ungenaugkeiten behaftet sein, welche sich anschließend in ungenauen Ergebnissen der Kalibrier-LUTs widerspiegeln.

Die EFI: "Printer Linearization", 13. August 2007 XP002657701 ist eine Anleitung zur Druckerlinearisierung mittels der Software EFI Color Management. Auch hier erfolgt die Linearisierung anhand von Messungen eines Testcharts. Eine Basislinearisierung wird angesprochen, ohne Details darüber zu geben, wie diese erfolgt. Die Dokumente EP 1237355 A2 und EP 1378956 A1 beziehen sich auf die Bestimmung eines Druckerfarbprofils und offenbaren keine Details der Linearisierung.

Ausgehend vom vorbeschriebenen Stand der Technik liegt der Erfindung die Aufgabe zugrunde, eine gegenüber dem oben beschriebenen Stand der Technik verbesserte Linearisierung der Primärfarben zu finden.

Zur technischen Lösung dieser Aufgabe wird mit der Erfindung ein Verfahren mit den Merkmalen des Patentanspruches 1 vorgeschlagen. Weitere Vorteile und Merkmale ergeben sich aus den Unteransprüchen.

Das erfindungsgemäße Verfahren ergänzt die Teilschritte einer Druckerkalibrierung basierend auf gemessenen CIELAB-Werten von Primärfarben verschiedener Tonwertabstufungen eines gedruckten Testcharts, wobei

> a) für jede Primärfarbe der Maximalwert farbmetrisch begrenzt wird,
>
> b) jede Primärfarbe farbmetrisch linearisiert wird,
>
> c) der Maximalwert des Zusammendrucks aller linearisierten Primärfarben farbmetrisch bestimmt wird,
>
> d) eine Definition des sich ergebenden Farbumfangs durchgeführt wird,
>
> e) die Außenhülle des Farbumfangs gleichabständig bestimmt wird,
>
> f) die Zwischenwerte der sich ergebenden Kalibrierungstabelle interpoliert werden,

dahingehend, dass im Verfahrensschritt b) zunächst die Tonwerte einer Primärfarbe linear skaliert werden, so dass der im Schritt a) ermittelte Maximalwert 100% Tonwert entspricht, die Gesamtlänge eines Kurvenzuges jeder Primärfarbe im CIELAB-Farbraum von 0% Tonwert bis zum im Schritt a) ermittelten Maximalwert 100% Tonwert als Summe der Farbabstände bestimmt wird, und anschließend die Tonwerte linear dem Anteil der durchlaufenen Länge relativ zur bestimmten Gesamtlänge des Kurvenzuges von 0% ausgehend bis zum im Schritt a) ermittelten Maximalwert 100% Tonwert neu zugeordnet werden.

Das erfindungsgemäße Verfahren dient der Erstellung einer optimierten Kalibrierungstabelle und der Definition der Sollwerte für diese Tabelle. Dabei werden optimale Maximalwerte für die Primärfarben definiert und diese linearisiert. Weiterhin wird eine 3- oder höher dimensionale Zuordnungstabelle gebildet, die einen optimal maximalen Farbauftrag aller Druckfarben berücksichtigt. Dabei wird ein visuell möglichst gleichabständiger Farbraum aufgespannt, der eine neutrale Grauachse enthält und homogene Farbübergänge bietet.

Im Folgenden werden die Einzelschritte beschrieben:

### 1. Farbmetrische Begrenzung des Maximalwertes der Primärfarben

Vorausgesetzt wird, dass bei der Steuerung eines Druckers wie üblich für jede Primärfarbe Ansteuerungswerte (sogenannte *Tonwerte,* von 0 bis 100 %) in aufgebrachte Farbmengen umgesetzt werden. Die Farbmenge, die 100 % entspricht, ist in der Regel vorab so festgelegt, dass sie drucktechnisch sinnvoll verarbeitbar ist, z. B. noch trocknen kann. Dieser Maximalwert muss aber nicht farbmetrisch sinnvoll sein. In diesem Schritt wird der *farbmetrisch optimale Maximalwert* bestimmt.

Auf dem Drucker wird ein Testchart gedruckt, das für jede Primärfarbe fein abgestuft aufsteigende Farbfelder zwischen 0 % und 100 % enthält (z. B. im 1 %-Abstand). Für jede einzelne Primärfarbe wird folgendes durchgeführt: Die gemessenen CIE L*a*b* Farbwerte der Felder werden in einer 1-dimensionalen Tabelle so eingetragen, dass jeder prozentualen Stufe (jedem Tonwert) ein CIE L*a*b* Wert zugeordnet wird. Die Abfolge der CIE L*a*b* Werte wird mit einem geeigneten Verfahren geglättet, um Druck- oder Messungenauigkeiten zu eliminieren. Für jede Stufe wird deren Farbsättigung bestimmt. Als Maß eignet sich hierfür z.B. die Buntheit C*, die definiert ist über

$$C^*_{ab} = \sqrt{(a^*)^2 + (b^*)^2}$$

. Der optimale Maximalwert einer Primärfarbe liegt an dem Punkt kurz vor dem Sättigungsmaximum, an dem die Steigung beim Erreichen der Sättigung unter einen definierten Grenzwert fällt. (Für unterschiedliche Primärfarben ergeben sich so im Allgemeinen unterschiedliche Maximalwerte.) Alle Farbfelder oberhalb des optimalen Maximalwertes werden aus der Tabelle entfernt. Die Tonwerte in der Tabelle werden linear skaliert, so dass der optimale Maximalwert den neuen, *farbmetrisch begrenzten Tonwert* 100 % zugeordnet bekommt.

Zeichnung 1a zeigt den Sättigungsverlauf einer Primärfarbe und die Bestimmung des optimalen Maximalwerts anhand des Maximums der Sättigung. Über dem prozentualen Tonwert in x-Richtung ist die Sättigung aufgetragen. Der Punkt X1 stellt den optimalen Maximalwert dar.

In Zeichnung 1b wird die Bestimmung des optimalen Maximalwerts anhand des Abfallens des Anstiegs der Sättigung unter einen definierten Wert dargestellt. Dieser Punkt ist in X2 erreicht. Der Grenzwert der Steigung ist als Tangente eingezeichnet.

Zeichnung 1c zeigt das Entfernen der Werte oberhalb des optimalen Maximalwertes und das lineare Skalieren der Tonwerte.

### 2. Farbmetrische Linearisierung der Primärfarben

Für jede Primärfarbe wurden in Schritt 1 der optimale Maximalwert bestimmt und die Tonwerte neu skaliert. Innerhalb des dreidimensionalen CIE L*a*b* Farbraumes bilden die Abstufungen einer Primärfarbe typischerweise einen gekrümmten Kurvenzug beginnend beim Papierweiß (Tonwert 0 %) bis zum optimalen Maximalwert (Tonwert 100 %), bei dem sich aber die L*a*b* Farbabstände nicht linear zu den Tonwerten verhalten. Zur Linearisierung wird nun die Länge des Kurvenzuges vom Papierweiß bis zu jeder Stufe bestimmt und danach eine neue Zuordnung erstellt, bei der ein Tonwert nunmehr linear dem Anteil der durchlaufenen Bahnlänge relativ zur Gesamtlänge bis zum optimalen Maximalpunkt entspricht.

Zuerst wird für die Länge des Kurvenzuges der Farbabstand zwischen den einzelnen Stufen bestimmt und aufaddiert. Ein geeignetes Maß hierzu ist z. B. die ΔE(1976)-Formel, die den kartesischen Abstand im CIE L*a*b*-Farbraum misst. Mit anderen Farbabstandsformeln kann eine davon verschiedene visuelle Unterschiedsbewertung umgesetzt werden, die dann nicht mehr der Länge des L*a*b*-Kurvenzuges entsprechen muss, aber dem Prinzip keinen Abbruch tut. Allgemein ist daher im Folgenden vom *kumulierten Farbabstand* die Rede.

Auf diese Weise ergibt sich eine tabellierte Funktion, die den farbmetrisch begrenzten Tonwerten aus Schritt 1 einen kumulierten Farbabstand bezüglich des Papierweißes (in Prozent, relativ zum Maximum) zuordnet. Diese Funktion wird invertiert, so dass sie einem relativen Abstandswert den dafür benötigten Tonwert zuordnet. Das geschieht durch Interpolation. Damit wird eine neue 1-dimensionale Linearisierungstabelle für diese Primärfarbe auf der Ausgangsseite gefüllt, die zu jedem relativen Abstandswert (z. B. in 1 %-Schritten) auf der Eingangsseite einen Tonwert aus Schritt 1 enthält. Die relativen Abstandswerte sind die neuen Ansteuerungswerte und werden nun als *linearisierte Tonwerte* bezeichnet.

Z. B. sei im Schritt 1 festgestellt worden, dass der farbmetrisch optimale Maximalwert einer drucktechnischen Ansteuerung 80 % entspricht, und im Schritt 2, dass ein farbmetrisch begrenzter Tonwert von 60 % zu einem relativen kumulierten Farbabstand von 50 % führt (die halbe Weglänge bis zum Maximalwert). Die Transformation der Ansteuerungswerte wird nun aus einem gewünschten linearisierten Tonwert von 50 % über die Linearisierungstabelle einen farbmetrisch begrenzten Tonwert von 60 % machen und diesen in den drucktechnischen Ansteuerungswert von 48 % (= 80 % von 60) skalieren.

Zeichnung 2a zeigt den gekrümmten Kurvenzug einer Primärfarbe im CIE L*a*b* Farbraum.

Zeichnung 2b zeigt den Verlauf des kumulierten Farbabstands in Bezug auf die Tonwerte.

Zeichnung 2c zeigt die invertierte Funktion, die dem kumulierten Farbabstand die Tonwerte zuordnet. Der Punkt a1 entspricht der Hälfte des gesamten kumulierten Farbabstands. Für diesen Punkt kann auf der y-Achse der benötigte Tonwert abgelesen werden.

Zeichnung 2d zeigt die Linearisierungstabelle für eine Primärfarbe.

Danach kann der Gesamtfarbumfangs des Druckers bestimmt werden, der auf diesen farbmetrisch begrenzten und linearisierten Primärfarben basiert. Dies kann unter Verwendung eines geeigneten Überdruckenmodells erfolgen oder durch Farbmessung eines Testcharts, das den gesamten Farbumfang mit Hilfe einer geeigneten Verteilung von Farbfeldern abtastet. Die Linearisierungstabellen der Primärfarben und die farbmetrische Begrenzung werden beim Drucken des Testcharts berücksichtigt, indem die Farbanteile der einzelnen Felder entsprechend der Tabellen korrigiert werden. Das ergibt eine Zuordnung von Ansteuerwerten zu CIE L*a*b* Farbwerten. Dabei werden gewisse Überschreitungen der maximalen Farbmenge (s. u.) noch in Kauf genommen. Die Zuordnung wird als Beschreibung des zu erwartenden Druckverhaltens bei den vorgegebenen Ansteuerwerten abgelegt.

3. Farbmetrische Bestimmung des Maximalwerts des Zusammendrucks aller Farben

Für die meisten Drucksysteme gibt es in Verbindung mit einem definierten Medium eine maximale Farbauftragsmenge. Wird mehr Farbe aufgebracht, so bilden sich z. B. im Falle eines Tintenstrahldruckers Farbseen auf dem Medium oder im Falle eines tonerbasierten Drucksystems kann die Tonerschicht reißen und abblättern. Wie eingangs erwähnt sind die Einzelfarben bereits auf drucktechnisch sinnvolle Farbmengen begrenzt. Im Zusammendruck kann aber leicht zu viel Farbe aufgebracht werden. Zur farbmetrischen Bestimmung der Maximalmenge wird auf Basis der Druckerbeschreibung (Zuordnung aus Schritt 2) im CIE L*a*b* Farbraum eine Achse vom Papierweiß in Richtung steigenden Farbauftrags festgelegt, z. B. für einen idealisierten 3-dimensionalen Fall die Neutralachse mit a*=b*=0, für den allgemeinen Fall z. B. die Hauptdiagonale des Hyperwürfels vom Papierweiß zum gegenüberliegenden Punkt mit maximaler Farbsumme. Dann wird der Endpunkt der Achse innerhalb des gemessenen Farbumfangs bestimmt. Im Fall der Neutralachse ist das der dunkelste neutrale Punkt (mit minimalem L*). Die zugehörigen Druckeransteuerungswerte haben dann die höchste Farbmenge. Ausgehend von diesem Punkt wird entlang der Achse ein spezielles Testchart erstellt, in dem heller werdende Stufen in festen farbmetrischen Abständen (z.B. 1 ΔL auf der Neutralachse) ausgewählt und die zugehörigen Ansteuerungswerte für Farbfelder aus der Zuordnung ermittelt und benutzt werden. Dieses auf farbmetrischer Basis erstellte Chart wird gedruckt und danach visuell bewertet. Dabei wird absteigend das Feld gesucht, ab dem keine visuellen Defekte mehr sichtbar sind. Dadurch ist die maximale Farbmenge bestimmt, die aber repräsentiert wird durch eine in CIE L*a*b* definierte Reduktion der maximalen Ansteuerungswerte.

Die Beschreibung des Farbumfangs aufgrund der Abtastung wird jetzt ausgehend vom Endpunkt der Achse abhängig von den Ansteuerungswerten so skaliert, dass auf den Ecken des Hyperwürfels für alle Farbkombinationen mit höherer Farbmenge die CIE L*a*b* Farbwerte entsprechend reduziert werden. Durch multilineare Interpolation der Reduktion zwischen den Hyperwürfelecken werden die CIE L*a*b* Farbwerte in der Zuordnung reduziert und ergeben so modifizierte Sollwerte für die spätere mehrdimensionale Kalibrierung. Basierend auf diesem so skalierten Farbumfang wird der nächste Schritt gerechnet.

Zeichnung 3a zeigt einen Schnitt durch den CIE L*a*b* Farbraum und den dunkelsten Punkt auf der Neutralachse m1. Die Punkte m2, m3 und m4 sind jeweils um einen definierten Betrag ΔL* heller.

Zeichnung 3b zeigt schematisch das zu druckende Testchart. Die Farbzusammensetzung der einzelnen Felder entspricht den aus 3a gefundenen neutralen Punkten.

Zeichnung 3c zeigt den anhand des Maximalwerts m3 skalierten Farbraum. Von den Würfelecken des hier gezeigten idealisierten 3-dimensionalen Falles wird nur die untere Ecke mit der 300 % Summe der Ansteuerungswerte reduziert, nicht aber die Nachbarecken mit 200 %. Daher führt die multilineare Interpolation der Reduktion im Wesentlichen zu einer Aufhellung der CIE L*a*b*-Sollwerte im unteren Bereich ohne Gamutverlust in den gesättigten Farben.

4. Bestimmung der gleichabständigen Außenhülle des Farbumfangs

Um einen möglichst visuell gleichabständigen Farbumfang nach der Kalibrierung und Farbmengenbegrenzung zu erhalten, werden im nächsten Schritt die Sollwerte (im L*a*b*-Farbraum) für die Außenhülle des Farbumfangs definiert. D. h. für den Fall einer idealisierten 3-dimensionalen Kalibrierungstabelle werden alle 6 Außenflächen des CMY-Würfels betrachtet. Eine solche Außenfläche bildet innerhalb des CIE L*a*b* Farbraums eine gekrümmte Fläche. Für den Fall einer 4-dimensionalen Kalibrierungstabelle werden alle 24 Teilflächen betrachtet, allgemein werden alle 2-dimensionalen Unterräume des n-dimensionalen Hyperwürfels so behandelt.

Auf jeder Fläche ist aus der in Schritt 3 reduzierten Zuordnung ein Liniengitter bekannt, dessen Kreuzungspunkte die CIE L*a*b* Farbwerte bilden. Trotz der Linearisierung der Einzelfarben sind die Kreuzungspunkte nicht unbedingt gleichmäßig verteilt. Das Liniengitter folgt der Form der gekrümmten Fläche im CIE L*a*b* Farbraum. Jeder Kreuzungspunkt auf dem Gitter hat einen Tonwert, der aus 2 Farbabstufungen der Primärfarben besteht und je nach Lage der Fläche 0 % oder 100 % der dritten und weiteren Primärfarben.

Die optimale Außenfläche wird analog zu Schritt 2 anhand des Farbabstands zweier benachbarter Gitterpunkte definiert, d.h. für alle Gitterlinien der 2 dimensionalen Außenfläche wird wie unter Schritt 2 definiert eine Linearisierung durchgeführt. Zuerst werden auf einer Linie mit konstanter Primärfarbe 2 die Abstufungen in Richtung von Primärfarbe 1 in Bezug auf den kumulierten Farbabstand linearisiert, wodurch sich die L*a*b-Sollwerte auf der Linie verschieben. Dann werden auf einer Linie mit konstanter Primärfarbe 1 die Abstufungen in Richtung von Primärfarbe 2 linearisiert. Da es für jeden Punkt dabei zu Verschiebungen entlang der zwei sich kreuzenden Gitterlinien kommen kann, ist es vorteilhaft, die Linearisierung iterativ durchzuführen, bis sich nur noch Verschiebungen ergeben, die unter einem definierten Grenzwert liegen und so das Optimum erreicht ist. Als Ergebnis entsprechen die verschobenen Tonwerte der Kreuzungspunkte den anteiligen kumulierten Farbabständen in beide Gitterrichtungen.

An den ursprünglichen Kreuzungspunkten der Zuordnungs-Gitter aller Außenflächen werden nun die CIE L*a*b* Sollwerte für die Kalibrierungstabelle abgelesen. Nach diesem Schritt sind die Sollwerte für die Außenhülle bestimmt.

Zeichnung 4a stellt das Gitter einer Außenfläche vor der Durchführung von Schritt 4 dar. Zeichnung 4b stellt das Ergebnis der Optimierung nach Schritt 4 dar.

5. Interpolation aller Zwischenwerte der Kalibrierungstabelle

Im nächsten Schritt werden nun alle weiteren (die inneren) CIE L*a*b* Sollwerte der Kalibrierungstabelle berechnet. Eine Möglichkeit dazu ist die Fortführung des Verfahrens aus Schritt 4, indem jetzt alle 3-dimensionalen Unterräume der reduzierten Zuordnungstabelle in Bezug auf kumulative Farbabstände linearisiert werden, dann alle 4-dimensionalen usw. Für den idealisierten 3-dimensionalen Fall ist aber die Grauachse von besonderer Bedeutung und dient als zusätzlicher innerer Anker für eine geeignete Interpolation innerhalb der Außenhülle des Farbumfangs.

Die Grauachse wird hier definiert als die Verbindungslinie zwischen Papierweiß und dunkelstemm neutralen Punkt. Die korrespondieren Tonwerte der Grauachse werden so verteilt, das auch hier der anteilig kumulierte Farbabstand entlang der Verbindungslinie dem Tonwert der Grauachse entspricht. Das bedeutet z. B. dass der CIE L*a*b* Sollwert für 50 % Cyan, 50 % Magenta, 50 % Gelb auf dem Mittelpunkt dieser Verbindungslinie liegt.

Für die Interpolation des Tabelleninneren dienen die linearisierten Außenflächen und die linearisierte Grauachse als Stützstellen, die die Ansteuerungswerte auf Sollfarbwerte abbilden. Als geeignete Methode für die Interpolation in einer solchen Punktewolke kann hier die "Thin Plate Spline" Interpolationsmethode angewendet werden.

Mit dieser Interpolation oder der Unterraumlinearisierung kann nun in der Zuordnungstabelle für jede beliebige Tonwertkombination der entsprechende CIE L*a*b* Sollwert für die Kalibrierung berechnet werden.

Zusammengefasst wurden aus der ursprünglichen Druckerbeschreibung (Zuordnung aus Schritt 2) die farbmetrischen CIE L*a*b* Sollwerte so reduziert, dass sie einer verträglichen Farbmenge im Druck entsprechen, und diese dann über die Außenflächen und innere Interpolation so verschoben, dass die Ansteuerwerte in dieser Tabelle zu näherungsweise gleichabständigem, homogenen Verhalten im CIE L*a*b* Farbraum führen.

Allerdings ist noch nicht bekannt, welche Ansteuerwerte tatsächlich gedruckt werden müssen, um dieses idealisierte Verhalten zu bekommen. Mit Hilfe der ursprünglichen Druckerbeschreibung können aber jetzt die Kombinationen von Ansteuerwerten gesucht werden, die zu einem gewünschten Sollwert führen. Bei mehreren Lösungen (im 4- und höher dimensionalen Fall) werden wie üblich Separationsvorschriften benutzt, um die beste Lösung auszuwählen. Diese wird als Ausgabe-Tonwertkombination ebenfalls in der Tabelle gespeichert.

## 6. Speichern und Anwenden der Kalibrierungstabelle

Um die Kalibrierungstabelle verwenden zu können bzw. zu einem späteren Zeitpunkt eine erneute Kalibrierung auf die Sollwerte durchführen zu können, werden die erforderlichen Zwischenergebnisse der einzelnen Schritte gespeichert. Das sind pro Primärfarbe die 1-dimensionalen Linearisierungstabellen aus Schritt 2, die die farbmetrische Begrenzung aus Schritt 1 implizit enthalten, sowie die 3- ,4- oder höher dimensionale Zuordnungstabelle von Ansteuerungswerten zu optimierten CIE L*a*b* Sollwerten und den erforderlichen Ausgabe-Tonwertkombinationen aus Schritt 5 gespeichert.

Wird jetzt die Kalibrierungstabelle benutzt, um beliebige Daten für den Drucker aufzubereiten, so kann aus den gespeicherten Werten schnell für jede beliebige Eingabe-Tonwertkombination die zu verwendende Ausgabe-Tonwertkombination interpoliert werden, ohne erneut die aufwändigere Suche nach den geeigneten Kombinationen, die den Sollwert erfüllen, durchführen zu müssen.

Benutzt man ein zur Kalibrierungstabelle passendes Testchart (welches Felder mit den Eingabe-Tonwertkombinationen der Tabelle enthält) und gibt es mit dieser Datenaufbereitung aus, werden die Ausgabe-Tonwertkombinationen aus der Tabelle benutzt und über die 1-dimensionalen Linearisierungstabellen umgerechnet und gedruckt. Im Idealfall entstehen genau die CIE L*a*b* Farbwerte, die die Druckerbeschreibung erwarten lässt, also die Sollwerte der Kalibrierungstabelle.

Im Laufe der Zeit kann sich durch eine Änderung der äußeren Einflüsse wie Temperatur, Luftfeuchtigkeit usw., durch Chargenänderung in der verwendeten Druckfarbe oder durch eine Änderung weiterer Faktoren die farbliche Darstellung des Ausdrucks trotz gleicher Ansteuerung ändern. Dann wird das Testchart farblich anders gedruckt. Soll dann der Drucker auf den ursprünglich festgehaltenen und optimierten Zustand kalibriert werden, so werden die Abweichungen zwischen den Soll- und Istwerten der Kalibrierungstabelle durch Messung festgestellt, und in der Druckerbeschreibung Änderungen der Ausgabe-Tonwertkombinationen gesucht, die relativ zu den ursprünglichen Ausgabe-Tonwertkombinationen die entsprechende Farbänderung kompensieren würden. Die so korrigierte Kalibrierungstabelle wird gespeichert und ersetzt die vorige Version.

## Vorteile der Erfindung

Die erfindungsgemäßen Verfahren haben den Vorteil, dass die Sollwerte der Kalibrierungstabelle in allen Kombinationen des Zusammendrucks berechnet werden. Bei dieser Berechnung werden die Sollwerte optimiert, beispielsweise im Hinblick auf eine ideale Graubalance und eine Gleichabständigkeit auf den Primärfarbachsen, den 2-dimensionalen Außenflächen und fortgesetzt im gesamten Inneren des Farbumfangs.

Ein so kalibriertes System reagiert überall im Farbumfang auf Veränderungen der Eingabefarbwerte ähnlich, und stellt damit nach außen einen Farbumfang zur Verfügung, der für hohe Anforderungen in der Farbwidergabe besonders geeignet ist. Dies zeigt sich z.B. in sehr glatten und harmonischen Farbverläufen in beliebige Richtungen.

Das beschriebene Verfahren ist außerdem relativ unempfindlich gegenüber Messungenauigkeiten, da die Sollwerte der Kalibrierungstabelle mathematisch berechnet werden und somit glatt und gutartig sind.

## Patentansprüche

1. Computerimplementiertes Verfahren zur Erstellung einer optimierten Druckerkalibrierung basierend auf gemessenen CIELAB-Werten von Primärfarben verschiedener Tonwertabstufungen eines gedruckten Testchart, wobei

   a) für jede Primärfarbe der Maximalwert farbmetrisch begrenzt wird,
   b) jede Primärfarbe farbmetrisch linearisiert wird,
   c) der Maximalwert des Zusammendrucks aller linearisierten Primärfarben farbmetrisch bestimmt wird,
   d) eine Definition des sich ergebenden Farbumfangs durchgeführt wird,
   e) die Außenhülle des Farbumfangs gleichabständig bestimmt wird,
   f) die Zwischenwerte der sich ergebenden Kalibrierungstabelle interpoliert werden,
   **dadurch gekennzeichnet, dass** im Verfahrensschritt b) zunächst die Tonwerte einer Primärfarbe linear skaliert werden, so dass der im Schritt a) ermittelte Maximalwert 100% Tonwert entspricht,
   die Gesamtlänge eines Kurvenzuges jeder Primärfarbe im CIELAB-Farbraum von 0% Tonwert bis zum im Schritt a) ermittelten Maximalwert 100% Tonwert als Summe der Farbabstände bestimmt wird,

und anschließend die Tonwerte linear dem Anteil der durchlaufenen Länge relativ zur bestimmten Gesamtlänge des Kurvenzuges von 0% ausgehend bis zum im Schritt a) ermittelten Maximalwert 100% Tonwert neu zugeordnet werden.

2. Verfahren nach Anspruch 1, **dadurch gekennzeichnet, dass** im Verfahrensschritt a) für jeden Tonwert dessen Farbsättigung bestimmt wird.

3. Verfahren nach Anspruch 1 oder 2, **dadurch gekennzeichnet, dass** der Maximalwert in Abhängigkeit vom Sättigungsmaximum festgelegt wird.

4. Verfahren nach Anspruch 1, **dadurch gekennzeichnet, dass** im Verfahrensschritt b) der Abstand eines Tonwertes zu Papierweiß in Bezug zum Abstand des Maximalwertes zum Papierweiß gesetzt wird.

5. Verfahren nach Anspruch 1, **dadurch gekennzeichnet, dass** im Verfahrensschritt c) ein Testchart gedruckt wird.

6. Verfahren nach Anspruch 5, **dadurch gekennzeichnet, dass** der Testchart auf festen farbmetrischen Abständen basierend erzeugt wird.

7. Verfahren nach Anspruch 1, **dadurch gekennzeichnet, dass** im Verfahrensschritt e) zunächst entlang einer Linie einer konstanten Primärfarbe 2 eine Abstufung in Richtung einer Primärfarbe 1 linearisiert wird, und dann entlang einer Linie einer konstanten Primärfarbe 1 einer Abstufung in Richtung einer Primärfarbe 2 linearisiert wird.

8. Verfahren nach Anspruch 7, **dadurch gekennzeichnet, dass** die Linearisierung in Art des Verfahrens gemäß Anspruch 4 durchgeführt wird.

9. Verfahren nach einem der Ansprüche 7 oder 8, **dadurch gekennzeichnet, dass** die Linearisierung iterativ durchgeführt wird, bis sich nur noch Verschiebungen ergeben, die unter einem definierten Grenzwert liegen.

10. Verfahren nach Anspruch 1, **dadurch gekennzeichnet, dass** bei der Durchführung des Verfahrensschrittes f) eine Interpolation auf der Basis einer linearisierten Grauachse durchgeführt wird.

11. Verfahren nach einem der vorangehenden Ansprüche, **dadurch gekennzeichnet, dass** die Sollwerte der Grauachse für festgelegte Tonwerte in L*a*b* definiert werden.

12. Verfahren nach Anspruch 11, **dadurch gekennzeichnet, dass** bei der Interpolation der Sollwerte der Druckerkalibrierung die im Verfahrensschritt e) linearisierte Außenhülle und die definierte Grauachse berücksichtigt werden, indem die linearisierten Außenflächen und die linearisierte Grauachse als Stutzstellen dienen, die die Anstellungswerte auf Sollfarbwerte abbilden.

13. Verfahren nach einem der vorangehenden Ansprüche, **dadurch gekennzeichnet, dass** im Schritt e) die Außenhülle des Farbumfangs zweidimensional linearisiert wird,

14. Verfahren nach einem der vorangehenden Ansprüche, **dadurch gekennzeichnet, dass** die Ausgabe-Tonwertkombinationen aus den L*a*b*-Sollwerten mittels eines geeigneten Verfahrens berechnet werden und dass die so berechneten Ausgabe-Tonwertkombinationen durch ein iteratives Verfahren angepasst werden um die Sollwerte zu erreichen.

## Claims

1. A computer-implemented method for generating an optimized printer calibration on the base of measured cielab values of primary colours of different tonal gradations of a printed test chart, wherein

  a) the maximum value will be limited in a colorimetric manner for each primary colour,
  b) each primary colour will be linearized in a colorimetric manner,
  c) the maximum value of the co-print of all linearized primary colours will be determined in a colorimetric manner,
  d) a definition of the resulting colour range will be carried out,
  e) the outer envelope of the colour range will be determined in an equidistant manner,
  f) the intermediate values of the resulting calibration table will be interpolated, **characterized in that** in the process step b) at first the tonal values of a primary colour will be linearly scaled, such that the maximum value determined in step a) corresponds to 100% of tonal value,
  the total length of a curved line of each primary colour in the cielab colour range comprised between 0% tonal value and the maximum value of 100% tonal value determined in step a) will be determined as the sum of the colour distances,
  and afterwards the tonal values will be newly assigned in a linear manner to the proportion of the passed length with respect to the determined total length of the curved line starting from 0% until the maximum value of 100% tonal value determined in step a).

**2.** A method according to claim 1, **characterized in that** in the process step a) the respective colour saturation will be determined for each tonal value.

**3.** A method according to claim 1 or 2, **characterized in that** the maximum value will be determined in dependence on the saturation maximum.

**4.** A method according to claim 1, **characterized in that** in process step b) the distance between a tonal value and paper white will be related to the distance between the maximum value and paper white.

**5.** A method according to claim 1, **characterized in that** in process step c) a test chart will be printed.

**6.** A method according to claim 5, **characterized in that** the test chart will be produced on the base of fixed colorimetric distances.

**7.** A method according to claim 1, **characterized in that** in process step e) at first a gradation in the direction of a primary colour 1 will be linearized along a line of a constant primary colour 2 and then a gradation in the direction of a primary colour 2 will be linearized along a line of a constant primary colour 1.

**8.** A method according to claim 7, **characterized in that** the linearization will be carried out like the method according to claim 4.

**9.** A method according to one of the claims 7 or 8, **characterized in that** the linearization will be realized in an iterative manner until only shifts result which remain under a defined limit value.

**10.** A method according to claim 1, **characterized in that** during the realization of process step f) an interpolation will be carried out on the base of a linearized grey axis.

**11.** A method according to one of the preceding claims, **characterized in that** the target values of the grey axis will be defined in L*a*b* for fixed tonal values.

**12.** A method according to claim 11, **characterized in that** during the interpolation of the target values of the printer calibration the outer envelope and the defined grey axis which have been linearized in process step e) will be considered **in that** the linearized outer surfaces and the linearized grey axis serve as support values which image the control values on target colour values.

**13.** A method according to one of the preceding claims, **characterized in that** in step e) the outer envelope of the colour range will be linearized two-dimensionally.

**14.** A method according to one of the preceding claims, **characterized in that** the output tonal value combinations of the L*a*b* target values will be calculated by means of an appropriate method and that the thus calculated output tonal value combinations will be adapted by means of an iterative method in order to obtain the target values.

## Revendications

**1.** Procédé mis en oeuvre par ordinateur pour créer un étalonnage optimisée d'une imprimante sur la base de valeurs CIELAB mesurées de couleurs primaires de nuances différentes de valeurs tonales d'une mire de contrôle imprimée, dans lequel

a) la valeur maximale est limitée de manière colorimétrique pour chaque couleur primaire,
b) chaque couleur primaire est linéarisée de manière colorimétrique,
c) la valeur maximale de l'impression commune de toutes les couleurs primaires linéarisées est déterminée de manière colorimétrique,
d) une définition de la gamme chromatique résultant est déterminée,
e) l'enveloppe extérieure de la gamme chromatique est déterminée de manière équidistante,
f) les valeurs intermédiaires du tableau d'étalonnage résultant sont interpolées,
**caractérisé en ce que** dans l'étape de procédé b) d'abord les valeurs tonales d'une couleur primaire sont graduées linéairement, de sorte que la valeur maximale déterminée dans l'étape a) correspond à 100% d'une valeur tonale, la longueur totale d'une courbe de chaque couleur primaire dans l'espace couleur CIELAB à partir de 0% de valeur tonale jusqu'à la valeur maximale déterminée de 100% de valeur tonale est déterminée comme le total des distances entre les couleurs,
et ensuite les valeurs tonales sont nouvellement attribuées de manière linéaire à la proportion de la longueur passée par rapport à la longueur totale déterminée de la courbe à partir de 0% jusqu'à la valeur maximale de 100% de valeur tonale déterminée dans l'étape a).

**2.** Procédé selon la revendication 1, **caractérisé en ce que** dans l'étape a) on détermine pour chaque valeur tonale sa saturation des couleurs.

**3.** Procédé selon la revendication 1 ou la revendication 2, **caractérisé en ce qu'**on détermine la valeur maximale en fonction du maximum de saturation.

**4.** Procédé selon la revendication 1, **caractérisé en ce que** dans l'étape de procédé b) on met la distance d'une valeur tonale au blanc de papier en rapport à la distance de la valeur maximale au blanc de papier.

**5.** Procédé selon la revendication 1, **caractérisé en ce que** dans l'étape de procédé c) une mire de contrôle est imprimée.

**6.** Procédé selon la revendication 5, **caractérisé en ce que** la mire de contrôle est produite sur la base de distances colorimétriques fixes.

**7.** Procédé selon la revendication 1, **caractérisé en ce que** dans l'étape e) on linéarise d'abord, le long d'une ligne d'une couleur primaire constante 2, une gradation dans la direction d'une couleur primaire 1 et ensuite on linéarise, le long d'une ligne d'une couleur primaire constante 1, une gradation dans la direction d'une couleur primaire 2.

**8.** Procédé selon la revendication 7, **caractérisé en ce qu'**on effectue la linéarisation à la manière du procédé selon la revendication 4.

**9.** Procédé selon l'une des revendications 7 ou 8, **caractérisé en ce qu'**on effectue la linéarisation de manière itérative jusqu'à ce que seulement des décalages résultent encore, qui restent au-dessous d'une valeur limite définie.

**10.** Procédé selon la revendication 1, **caractérisé en ce qu'**on effectue une interpolation sur la base d'un axe des gris linéarisé pendant la réalisation de l'étape de procédé f).

**11.** Procédé selon l'une des revendications précédentes, **caractérisé en ce qu'**on définit les valeurs cibles de l'axe des gris pour des valeurs tonales fixées dans L*a*b*.

**12.** Procédé selon la revendication 11, **caractérisé en ce que** pendant l'interpolation des valeurs cibles de l'étalonnage d'une imprimante on considère l'enveloppe extérieure linéarisée dans l'étape de procédé e) et l'axe des gris défini **en ce que** les surfaces extérieures linéarisées et l'axe des gris linéarisé servent comme des points de support, qui reproduisent les valeurs de commande sur des valeurs de couleur cibles.

**13.** Procédé selon l'une des revendications précédentes, **caractérisé en ce qu'**on linéarise l'enveloppe extérieure de la gamme de couleurs en deux dimensions dans l'étape e).

**14.** Procédé selon l'une des revendications précédentes, **caractérisé en ce que** les combinaisons de valeurs tonales sorties sont calculées à partir des valeurs cibles L*a*b* par moyen d'un procédé approprié et que les combinaisons de valeurs tonales sorties ainsi calculées sont adaptées par moyen d'un procédé itératif pour obtenir les valeurs cibles.

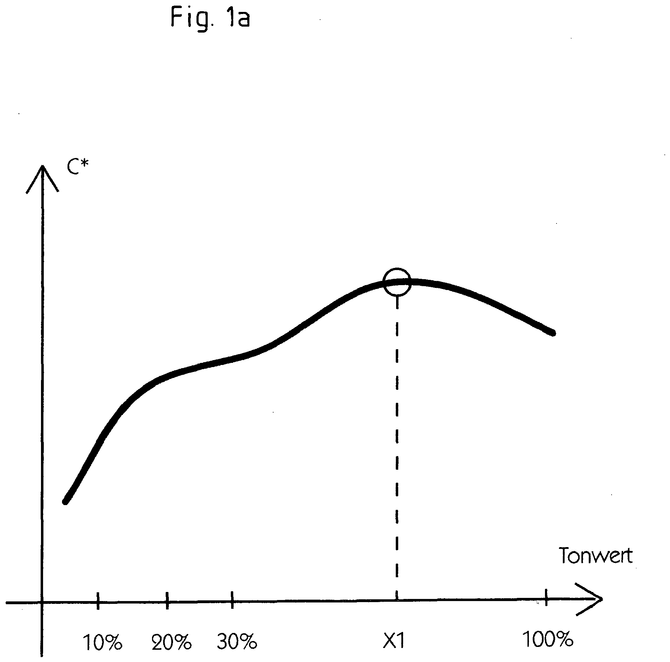

Fig. 1a

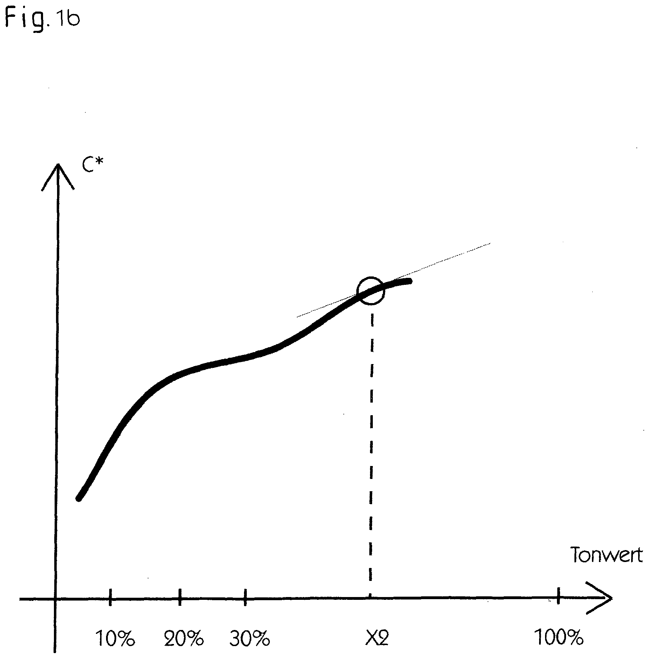

Fig.1b

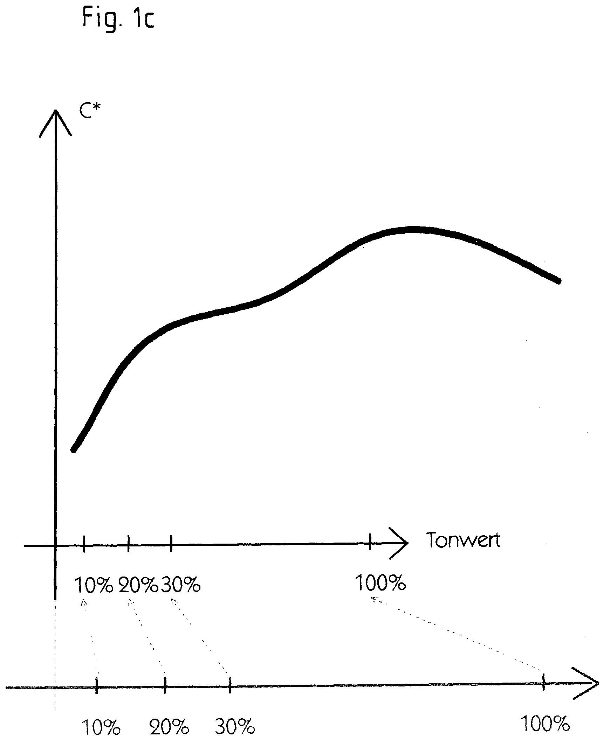

Fig. 1c

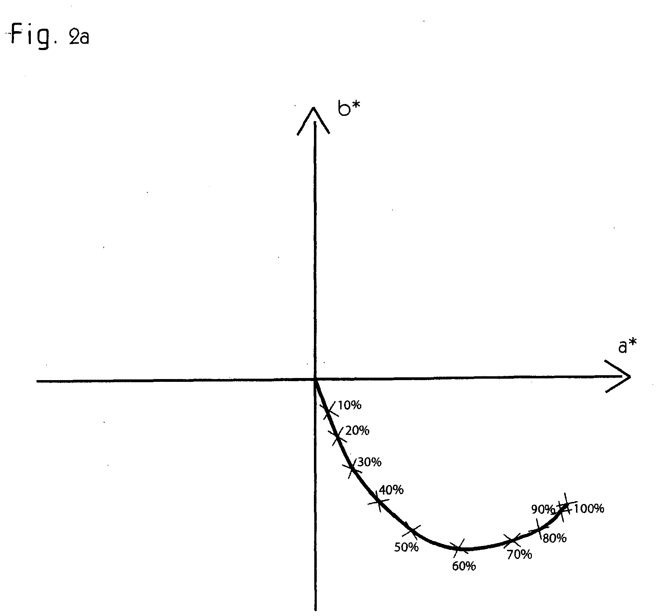

Fig. 2a

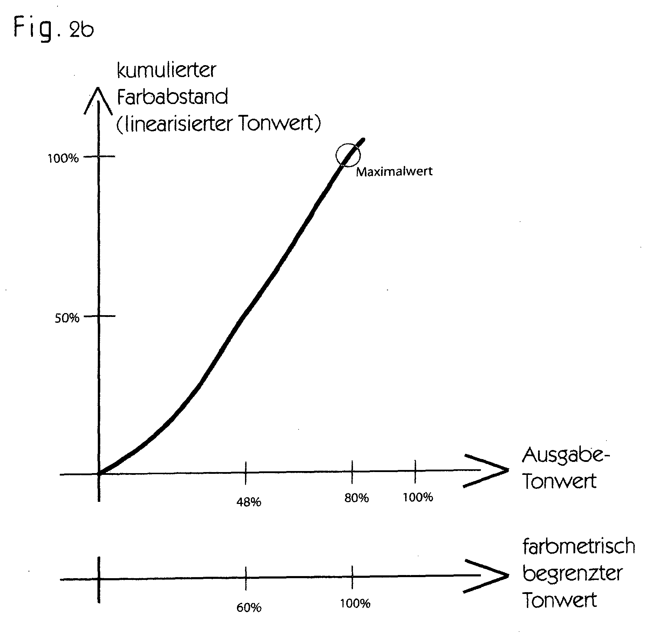

# Fig. 2b

kumulierter
Farbabstand
(linearisierter Tonwert)

100%

Maximalwert

50%

Ausgabe-
Tonwert

48%     80%    100%

farbmetrisch
begrenzter
Tonwert

60%     100%

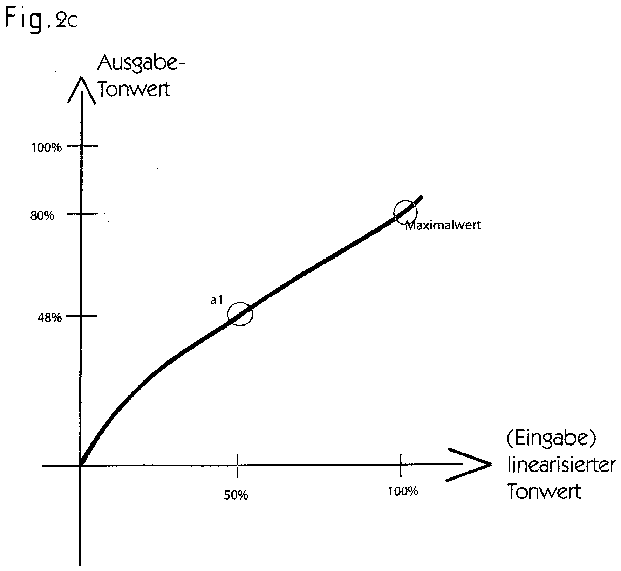

Fig. 2c

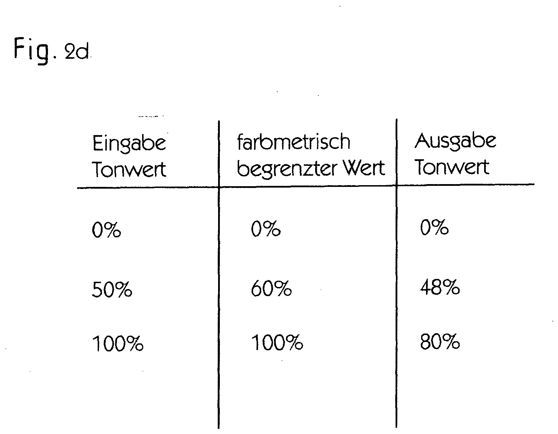

Fig. 2d

| Eingabe<br>Tonwert | farbmetrisch<br>begrenzter Wert | Ausgabe<br>Tonwert |
|---|---|---|
| 0% | 0% | 0% |
| 50% | 60% | 48% |
| 100% | 100% | 80% |

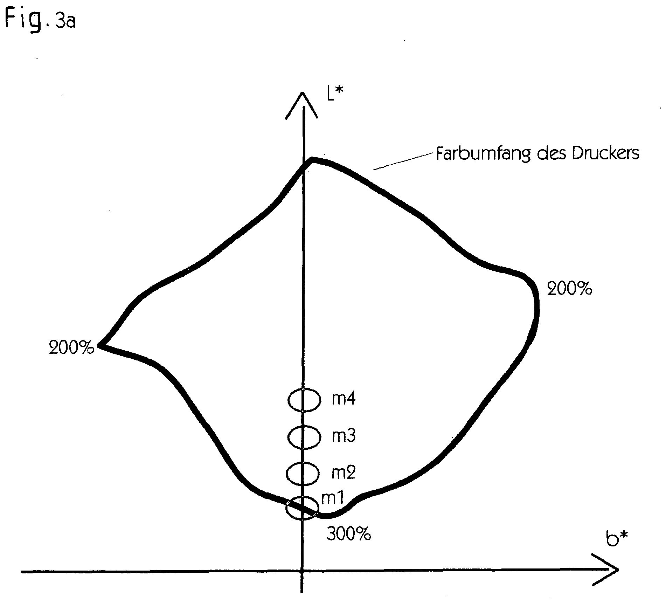

Fig. 3a

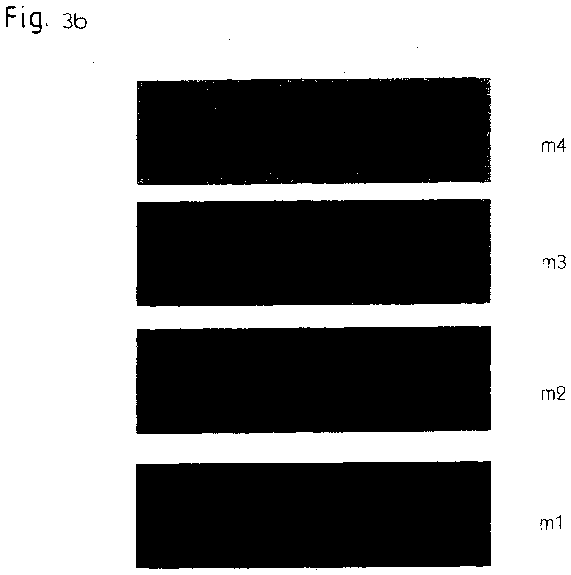

Fig. 3b

m4

m3

m2

m1

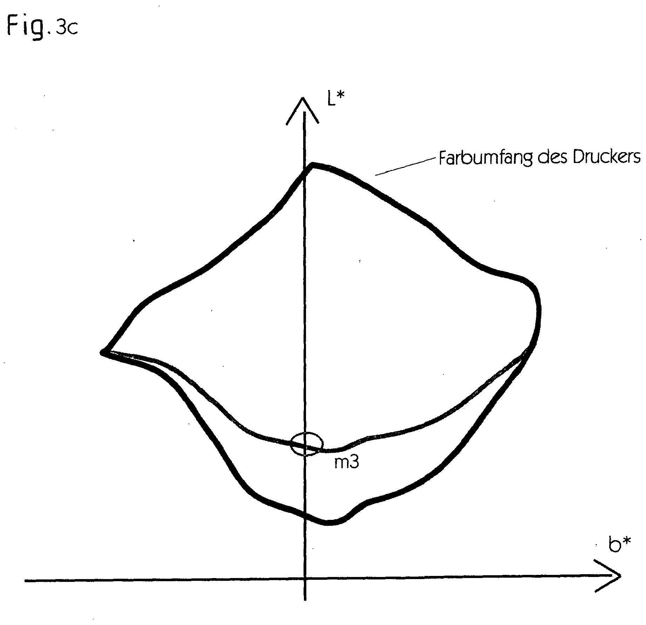

Fig.3c

L*

Farbumfang des Druckers

m3

b*

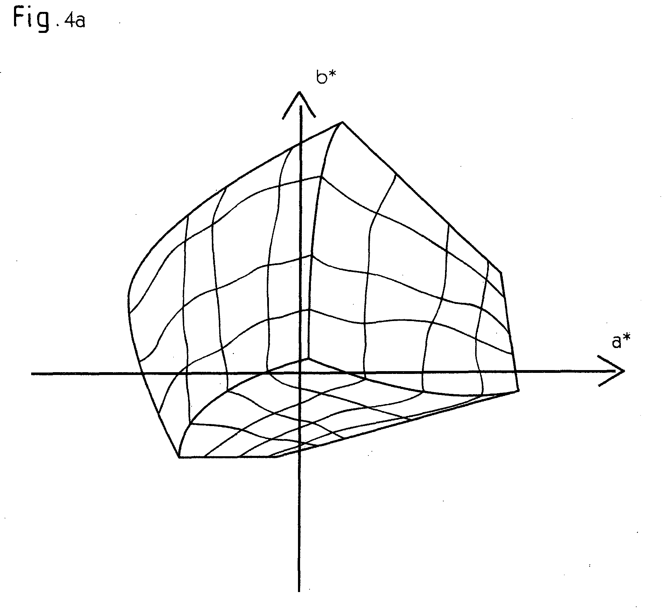

Fig.4a

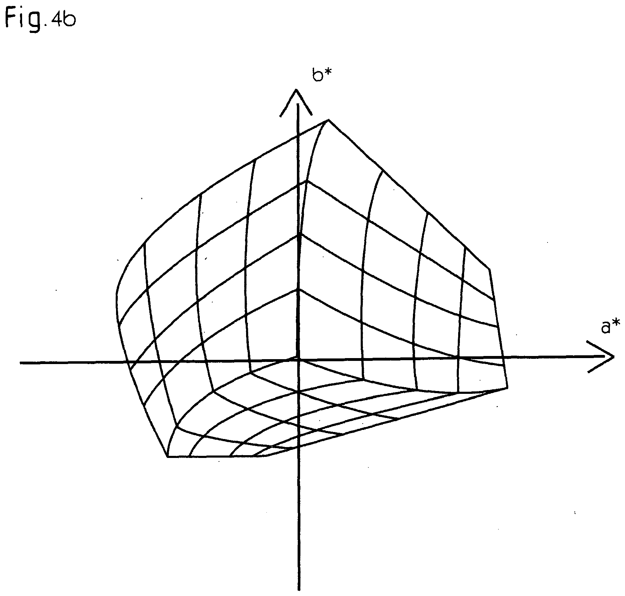

Fig.4b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2003098986 A1
- EP 1237355 A2
- EP 1378956 A1

**In der Beschreibung aufgeführte Nicht-Patentliteratur**

- **EFI.** *Printer Linearization,* 13. August 2007